(19) Europäisches Patentamt
European Patent Office
Office européen des brevets

(11) **EP 4 025 897 B1**

(12) **EUROPEAN PATENT SPECIFICATION**

(45) Date of publication and mention
of the grant of the patent:
**09.07.2025 Bulletin 2025/28**

(21) Application number: **20771342.1**

(22) Date of filing: **27.08.2020**

(51) International Patent Classification (IPC):
$G01N\ 21/49^{(2006.01)}$     $G01F\ 23/292^{(2006.01)}$

(52) Cooperative Patent Classification (CPC):
**G01N 21/532; G01F 23/2921; G01N 21/8507;**
G01N 21/3577

(86) International application number:
**PCT/GB2020/052054**

(87) International publication number:
**WO 2021/044124 (11.03.2021 Gazette 2021/10)**

(54) **SETTLEMENT ANALYSER AND METHOD OF ANALYSING SETTLEMENT**

ABSETZUNG-ANALYSER UND VERFAHREN ZUR ANALYSE VON ABSETZUNG

ANALYSEUR DE SEDIMENTATION ET METHODE D'ANALYSE DE SEDIMENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2019 GB 201912817**

(43) Date of publication of application:
**13.07.2022 Bulletin 2022/28**

(73) Proprietor: **Advanced Sampling Process
Instruments Limited
Killearn Stirlingshire G63 9LQ (GB)**

(72) Inventors:
• **DIAMOND, Ken**
**Scotland G75 8PT (GB)**
• **IBRAHIM, Mustafa Ali Abdallah**
**Glasgow Scotland G21 1XB (GB)**

(74) Representative: **Walker, Stephen et al
Lincoln IP
4 Rubislaw Place
Aberdeen, Aberdeenshire AB10 1XN (GB)**

(56) References cited:
**WO-A1-2015/124235    WO-A1-2017/151516
WO-A1-2019/115996    GB-A- 2 549 197**

## Description

The present invention relates to the field of settlement analysis such as may be employed to characterise samples from a process or flow. More specifically, the present invention concerns improvements to settlement analysers that provides improved determination of levels, quantities and/or interface layer depth of samples. Such samples may be retrieved by sampling apparatus in the process or flow. The present invention may be implemented in standalone apparatus that receive and analyse samples in containers.

### Background to the invention

In many processes, it is required to analyse a sample (e.g. liquid or other fluid) from within the process while maintaining a stable and controlled environment. Additionally, such processes may involve liquids with suspended solids, which are also required to be analysed, placing additional burden on a sampling system. Since the analysis should be performed on a sample taken from within the process the sampling system and the analysis itself must be reliable and robust to provide extended periods of service without any intervention by the operator or remedial action.

Such reliability and robustness is provided, for example, by the Applicant's proprietary sampling apparatus, for example as described in UK Patent Number GB2549197. However, there remains a need for a reliable and robust approach to the analysis of samples such as may be obtained using such sampling apparatus.

For example, one of the most common tests carried out in activated sludge wastewater treatment is the sludge settlement test in which a sample of mixed liquor is collected in a sample container (for example a sample tube or cylinder) and allowed to settle for 30 minutes. A visual measurement is then taken of the amount of settled solids at the bottom of the sample tube or cylinder using gradations provided on the sample tube or cylinder itself. However this information is not entirely useful without knowledge of other parameters or characteristics of the sludge, which must be determined by other separate processes or analyses.

In the water industry, mixed liquor suspended solids (MLSS) meters and turbidity meters are used to provide some of the data required, but these increase the amount of equipment required in order to make meaningful and accurate measurements.

Patent document WO 2015/124235 A1 discloses an apparatus and method for determining the liquid level of salvaged blood in a blood collection reservoir of an autologous blood transfusion system.

In the oil and gas industry, volume displacement vessels housed in sight glasses that are mechanically linked to control actuators (or trolls) are utilised in separation tanks or very expensive and complex gamma ray detection systems are employed.

In multiphase flows in the oil and gas industry, it is desirable to know the amounts and relative proportions of crude oil, natural gas and water in a particular flow. Conventional multiphase flow meters (MPFMs) are very complex and expensive apparatuses and require knowledge of composition or at least phase fraction to operate effectively. This composition data is typically taken from assumed values or samples (which are taken infrequently). There are therefore several disadvantages of conventional MPFMs.

It is an object of at least one aspect of the present invention to obviate and/or mitigate one or more disadvantages of known/prior apparatus such as described above.

Furthermore, it is an object of at least one embodiment of the present invention to provide an apparatus that provides one or more of the above-mentioned desired features and/or advantages.

Further aims and objects of the invention will become apparent from reading the following description.

### Summary of the invention

According to a first aspect of the invention, there is provided a settlement analyser according to claim 1. Preferred and optional features of the settlement analyser are set out in claims 2 to 9.

According to a second aspect of the invention, there is provided a method of analysing settlement within a sample according to claim 10. Preferred and optional features of the method are set out in claims 11 to 14.

According to a third aspect of the invention, there is provided an apparatus for obtaining samples from a process or flow according to claim 15.

### Brief description of the drawings

There will now be described, by way of example only, embodiments of aspects of the invention with reference to the drawings (like reference numerals being used to denote like features), of which:

Figure 1 illustrates in schematic form a settlement analyser not falling within the scope of the present invention comprising an array of emitters and an array of detectors;

Figure 2 illustrates in schematic form a settlement analyser according to an embodiment of the present invention comprising an array of emitters and two arrays of detectors;

Figure 3 illustrates in schematic form another alternative not falling within the scope of the present invention, comprising a first example of interleaved emitters and detectors;

Figure 4 illustrates in schematic form a further alternative settlement analyser not falling within the scope of the present invention, comprising a second example of interleaved emitters and detectors;

Figure 5 is a graph of output voltage versus time for an array of detectors during a sludge settlement test using a settlement analyser;

Figure 6 is a graph of clarity versus time for the array of detectors during the sludge settlement test;

Figure 7 is a graph of clarity versus time for a selection of detectors of the array during the sludge settlement test;

Figure 8 is a graph of turbidity versus time for an array of detectors during an algae settlement test;

Figure 9 is a graph of turbidity versus time for a first selection of detectors of the array during the algae settlement test;

Figure 10 is a graph of turbidity versus time for a second selection of sensors of the array during the algae settlement test;

Figure 11 illustrates in exploded view an apparatus for obtaining samples from a process or flow, the apparatus comprising a settlement analyser according to the present invention;

Figure 12 is a schematic representation of the movement of the gate within the sample chamber of the apparatus shown in Figure 11 in a first (clockwise) direction;

Figure 13 is a schematic representation of the movement of the gate in a second (anticlockwise) direction within the sample chamber of an alternative apparatus which comprises a settlement analyser located on each sample-facing surface of the dam;

Figure 14 is a schematic representation of the movement of the gate in a second (anticlockwise) direction within the sample chamber of another alternative apparatus which comprises a settlement analyser located on each sample-facing surface of the gate; and

Figure 15 illustrates a stand-alone settlement analyser configured to analyse liquid samples contained within sample containers.

Detailed description of preferred embodiments

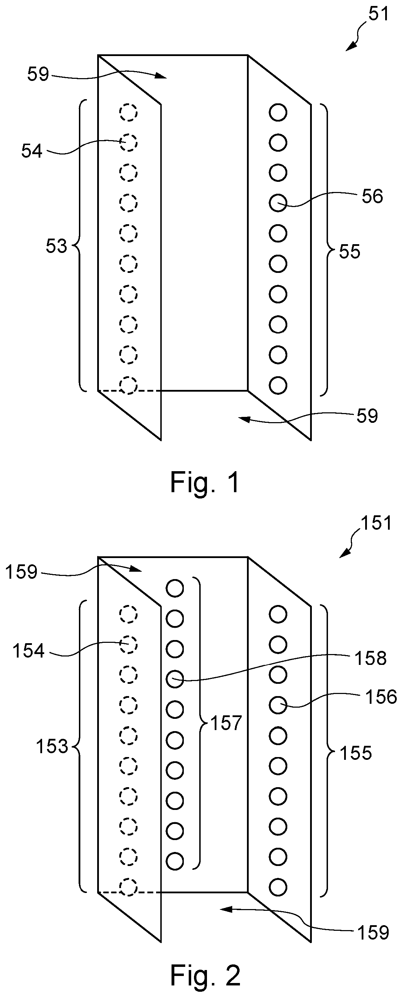

Embodiments of the present invention are illustrated in and will now be described with reference to Figures 1 to 15.

Figure 1 illustrates in schematic form a settlement analyser 51. The settlement analyser comprises a vertical array 53 of emitters 54 and a corresponding vertical array 55 of detectors 56. In this embodiment there are provided ten pairs of emitters and detectors, although in practice any number of emitters and detectors can be employed; for example in experiments discussed below the analyser comprised twenty-four emitter-detector pairs. It is also not necessary that emitters and detectors be provided in pairs or sets; it will be clear from the following discussion that it will be possible to implement the invention with different numbers of emitters and detectors, nor is it necessary that the arrays be oriented vertically although this is preferred.

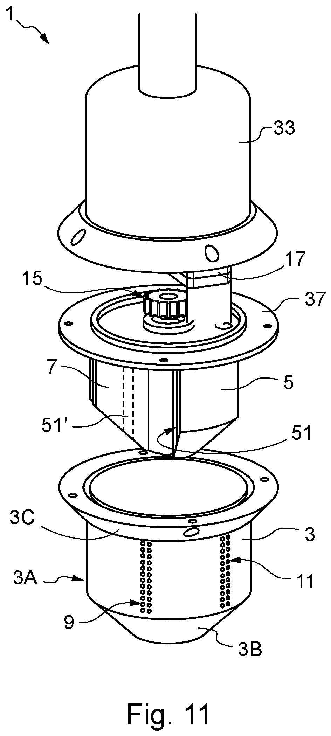

Between the emitter array 53 and the detector array 55 is defined a sampling channel 59. Fluid can enter or be placed in the sampling channel 59 in any way, but by way of example the settlement analyser may be located on or in the wall of a vessel (or part of a vessel) into which fluid is received and thereby exposed to the fluid directly, or the fluid can be inserted in the sampling channel within a suitable container such as a test tube or sample bottle. Examples corresponding to these arrangements are described further below and with reference to Figures 11 to 15.

In this example, the emitters 54 are infrared LEDs, and the detectors 56 are infrared sensitive photodiodes. Infrared is preferred because of the cheap availability of components, low divergence of infrared LEDs, and the relatively low level of interference or disturbance from other sources of light in the environment. Furthermore, small component size allows for ease of mounting (e.g. on PCBs) as well as enabling close spacing of adjacent emitters/detectors. Of course, any suitable emitter/detector arrangement can be employed.

The settlement analyser 51 operates by illuminating one of the emitters 54 and detecting light received from the emitter 54 at the corresponding detector 56. The emitter 54 is then switched off and a subsequent emitter 54 is illuminated and light from that emitter 54 is detected at its corresponding detector 56. By repeating this for all of the emitter-detector pairs an instantaneous transmissivity (or transmittance) profile for the sample contained within the sampling channel is obtained. If the sample is well mixed it is to be expected that the profile will be relatively consistent whereas if the sample is settled it is to be expected that the profile may vary and correspond to any layers which may form. It will be understood that the amount of light received by a photodetector 56 will be proportional to the transmittance of the sample (affected by absorption, reflection and scattering within the sample) in the region between that photodetector and the corresponding emitter 54.

In ways that will be well known to the skilled person, or readily implemented, repeated measurements can be taken to determine a mean. This mean may be monitored as a function of time.

The sequence in which each emitter 54 emits light is preferably in order, for example from top to bottom or bottom to top, although the emitters 54 can emit light in any order. In the ten emitter/detector arrays shown in Figures 1 and 2, this would be in order 1-2-3-4-5-6-7-8-9-10 or 10-9-8-7-6-5-4-3-2-1, repeating. In an alternative sequence, the emitters 54 can be purposefully made to emit light out of order to minimise cross-talk. For example, the order might be 1-6-2-7-3-8-4-9-5-10 so as to maximise the mean separation between successive emitters. Alternatively, or additionally, a sufficient pause between successive emitters might be employed to minimise or at least reduce cross-talk.

In some cases it may be practical to illuminate multiple emitters at the same time, for example in a sequence such as 1&6-2&7-3&8-4&9-5&10. It is however foreseen that in some cases this might lead to undesirable cross-talk. That said, if the angle of illumination of a particular emitter is known, or can be controlled for example by shielding, it will be possible to avoid cross-talk by ensuring that the illumination from emitters illuminated at the same time do not overlap or at least that the illumination from emitters illuminated at the same time does not impinge on detectors corresponding to other illuminated emitters. Testing in a particular implementation would readily reveal whether cross-talk was likely to occur and the sequence could be adjusted accordingly. For example, in the case of emitters having a relatively narrow angle of illumination and many emitters and detectors, it is foreseen that several emitters might be illuminated at the same time.

In many cases it will be sufficient to detect the light emitted by a particular emitter 54 by a corresponding detector 56 opposing the emitter 54, and this might be particularly true if this results in an acceptable resolution. As discussed below however it will be possible and in some cases desirable and/or advantageous to detect the light emitted by a particular emitter at more than one detector 56. It is also noted above that emitters and detectors need not be provided in pairs and an example of how this might be implemented in practice is also discussed further below.

Note that it is envisaged that the settlement analyser may be provided with an integrated controller or processor which is programmed or otherwise configured to control the emitters and receive and process signals or outputs from the detectors, and perform analysis thereof. Otherwise, the settlement analyser can be connected to a separate controller or processor, for example a PC or dedicated microcontroller (such as a suitably programmed Arduino or Android device), for example via USB, Bluetooth, NFC or WiFi, for this purpose.

Figure 2 illustrates in schematic form a settlement analyser 151 according to the invention. As with the settlement analyser 51 illustrated in Figure 1, the settlement analyser 151 comprises an array 153 of emitters 154 and a corresponding array 155 of detectors 156.

However, according to the current invention, there is also provided a second array 157 of detectors 158. As such, there is provided ten sets of emitters 154 and detectors 156, 158, although, as noted above, in practice any number of sets of emitters and detectors can be employed. The location of the second array 157 of detectors 158 is such that the detectors 158 receive light from emitters 154 in a direction substantially perpendicular to the light received by detectors 156. These detectors 158 are suitably located to detect light which is scattered within the sample, which can be used to determine the turbidity of the sample, for example. It is also envisaged that the detectors 158 might be employed to detect fluorescence within the sample volume.

An important measurement that the detectors 158 can be used to make is a measurement of the mixed liquor suspended solids (MLSS) concentration. In a well mixed sample, MLSS concentration is proportional to the ratio of scattered light to transmitted light. Accordingly, if simultaneous measurements are taken with detectors 156 and 158 this can be calculated. The skilled person will realise that with an array of emitters and detectors a measurement of MLSS can be taken at each emitter-detector pair (or other combinations as envisaged and discussed below) and a mean value determined. When placing a sample in the sample volume it may be beneficial to carry out this analysis before the sample is allowed to settle, preferably when well-mixed, thus giving an MLSS value that can be employed later in the analysis process (see below).

In a very simple example of a sludge sample placed in the sample volume it will be appreciated that, over time, the sample will settle resulting in separation of the sample into sediment or settled solids towards the bottom of the sample volume and supernatant liquid or liquor above the sediment or settled solids. Knowledge of the height at which the boundary between these regions lies is an important factor in determining the total suspended solids for a particular sample, which is a key piece of information in wastewater treatment applications where it can determine whether water from which the sample has been drawn can be reused and how. Any manner of processing decisions can be made on the basis of the information obtained by the settlement analyser.

In another example, in the case of multiphase flows in the oil and gas industry it is helpful to know the amounts of crude oil, natural gas and water in a sample taken from the flow and identifying interface levels or locations allows a determination of the amounts of each constituent in the flow. The analyser can be used in production monitoring for reservoir optimisation; knowledge of what is being recovered from a particular reservoir and in what fractions can be used to control production rates and maximise (or at least increase) reservoir integrity and production. This information can also provide an input to allocation; monitoring component flow rates provides a means for producers to ensure correct fluid amounts are allocated back after commingling and subsequent separation. It will also be possible to monitor and trend parameters that influence the formation of scales, hydrates, sand and cause other flow assurance problems. It is envisaged that not only may the analyser provide improved input of composition or at least phase fraction to MPFMs, but it may provide an alternative to MPFMs for monitoring multiphase flows or supplement existing or conventional arrangements.

The resolution of the settlement analyser 51,151 is limited by the minimum separation of the emitters 54,154 and the detectors 56,156, 158. By way of example, an infrared LED or infrared photodiode may have a diameter of 5 mm. Assuming zero spacing between adjacent infrared LEDs or photodiodes, the maximum resolution that can be achieved in normal operation is 5mm. Put another way, without practicing any of the procedures described herein to improve resolution through clever operation of the settlement analyser, this is the maximum uncertainty in any determination of the location of, for example, an interface between two different layers.

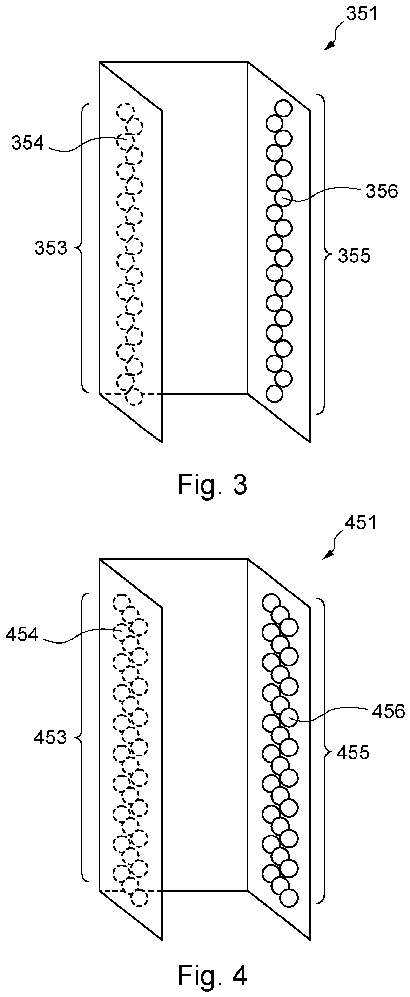

However, the resolution of the settlement analyser can be improved by interleaving or staggering additional arrays of emitters and detectors. Figure 3 and Figure 4 illustrate in schematic form further alternative settlement analysers 351 and 451. As with the settlement analysers 51 and 151 illustrated in Figures 1 and 2, the settlement analysers 351 and 451 comprise arrays 353 and 453 of emitters 354 and 454, and corresponding arrays 355 and 455 of detectors 356 and 456. However, in these embodiments the emitters 354 and 454 and detectors 356 and 456 are interleaved or staggered so as to increase resolution. In this way there is provided twenty and thirty sets or pairs of emitters 354,454 and detectors 356, 456, respectively. As such, the settlement analyser 351 increases the resolution of the settlement analyser 51 by doubling the number of emitter-detector pairs in (roughly) the same vertical height, and the settlement analyser 451 increases the resolution of the settlement analyser further by tripling the number of emitter-detector pairs in (roughly) the same vertical height.

The resolution of the settlement analyser can alternatively (or indeed additionally) be improved in other ways. For example, a first emitter 54, 154, 354, 454 in the array 53, 153, 353, 453 can be illuminated and light detected at every one of the detectors 55, 155, 355, 455 in the array 53, 153, 353, 453 (simultaneously or sequentially). Once all of the emitters 54, 154, 354, 454 in the array 53, 153, 353, 453 have been illuminated and light detected at every one of the detectors 55, 155, 355, 455 in the array 53, 153, 353, 453 for each emitter, the data can be processed to determine with improved accuracy the location of any interfaces and/or the depth of any interface layers between the fractions in the sample volume.

In practice, it may be burdensome and indeed unnecessary to obtain and process data from every detector for each emitter. This is particularly the case when the sample being analysed is such that a meaningful or measurable amount of light emitted from any particular emitter is unlikely to reach particular detectors, or for example where there are multiple interfaces between different regions of a settled or otherwise separated sample. As such, and as intimated above, signals received by detectors from their respective emitters can be analysed in order to ascertain a relatively coarse determination of where the interface between two layers in the sample volume lies and/or the depth of any interface layers. For example, emitter-detector pair 9 may produce a relatively low voltage signal whereas emitter-detector pair 10 might produce a relatively high voltage signal. From this information it can be inferred that (following the sludge settlement example) the interface between the settled solids and the supernatant liquor lies somewhere between emitter-detector pairs 9 and 10. By detecting the light detected by detector 10 from emitter 9, and likewise the light detected by detector 9 from emitter 10, it is possible to more accurately determine the location and/or the depth of the interface between these emitter-detector pairs because detector 9 will produce a higher voltage signal and detector 10 will produce a lower voltage signal, the increase and reduction being proportional to the ratio of settled solids to supernatant liquor in this region and hence where the interface lies in this region. Obtaining measurements from other adjacent detectors, say 8 and 11, will increase the certainty of the level determination.

A combination of one or more of the possible modifications above can give rise to a significant increase in resolution of a particular settlement analyser in use. For example, in the case of a settlement analyser having ten emitter-detector pairs the resolution can be effectively doubled by detecting light received from an emitter by its respective detector and the two adjacent detectors. A small correction factor can be applied for the slight increase in absorption; again this correction factor might be determined by calibrating the analyser using a calibration sample or simply by accounting for the slightly increased absorption resulting from a slightly increased optical pathlength.

As noted above it is also not necessary to provide emitters and detectors in pairs. By way of example, in an embodiment (not shown) there may be provided an array of, say, ten emitters corresponding to the array 53 of emitters 54 shown in Figure 1 and an array of, say, twenty detectors corresponding to the array 355 of detectors 356 shown in Figure 3. There may alternatively be provided an array of, say, thirty emitters corresponding to the array 453 of emitters 354 shown in Figure 4 and an array of, say, ten detectors corresponding to the array 55 of detectors 56 shown in Figure 1. Indeed any number of emitters and any number of detectors may be employed.

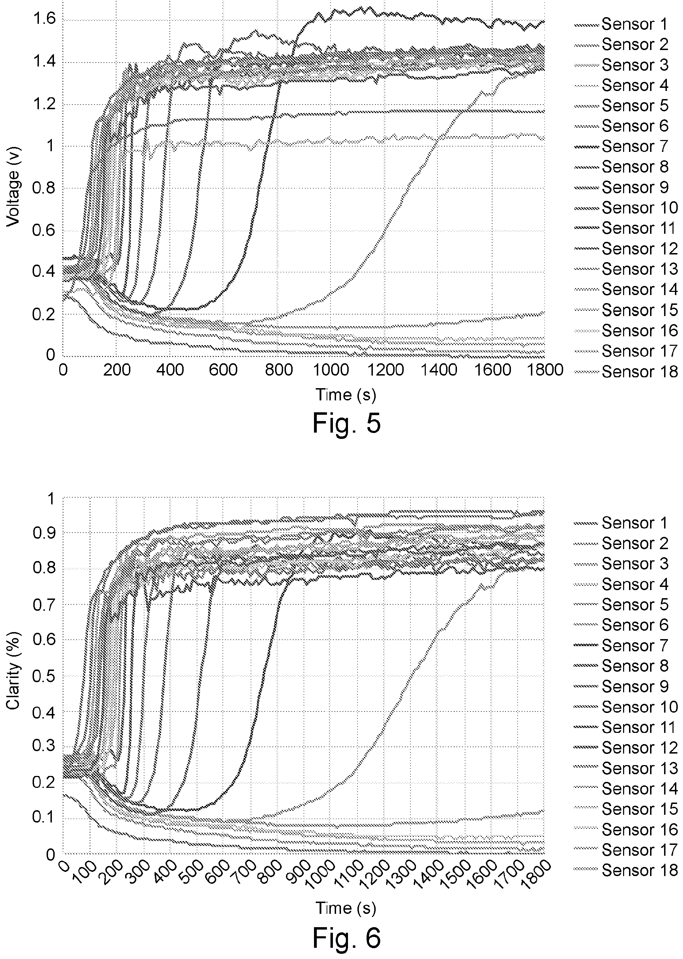

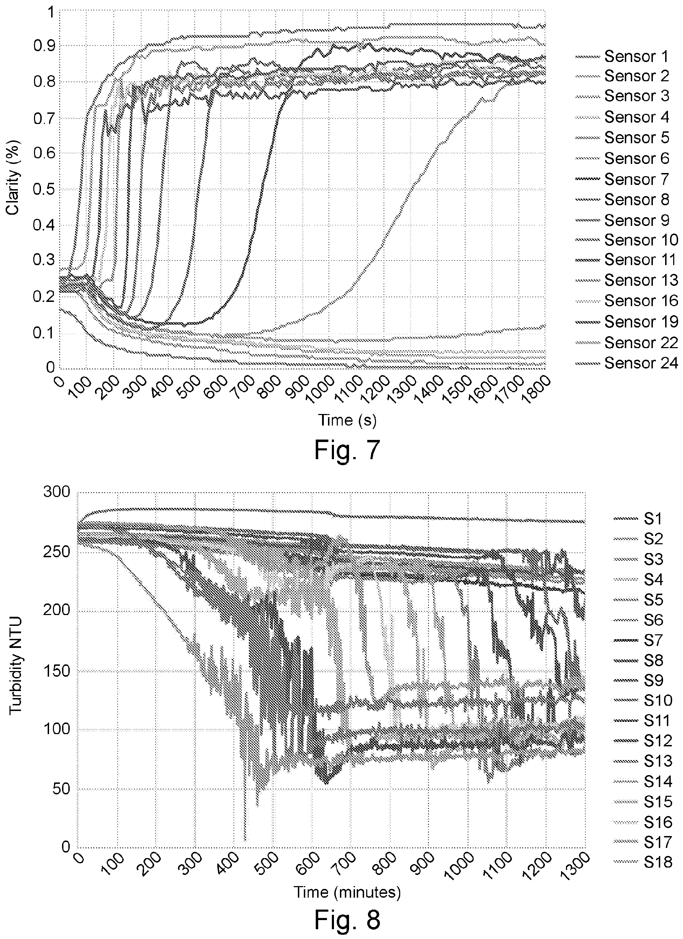

Figures 5, 6 and 7 are graphs showing the results of a sludge settlement test carried out to prove the concept and practical application of the settlement analyser. In this test a settlement analyser similar to that illustrated in Figure 1 was employed, this analyser having 24 sensors. Note that sensor 1 is lowermost and sensor 24 uppermost in the sample analyser. Figure 5 illustrates the voltage output from each sensor as a function of time. At each time increment, the group of sensor data provides an optical profile of the sample. What can be gleaned from this graph is that by 1800 seconds (30 minutes) the optical profile shows that the sludge sample has settled into two distinct layers but there is some uncertainty about how sensor outputs relate to one another to understand what is happening in the sample volume. Figure 6 shows the same data but calibrated with respect to a calibration sample (water) which allows for the voltage measurements to be converted into measurements of clarity. Figure 7 omits some of the (calibrated) sensor data, showing only traces corresponding to sensors 1 to 11, 13, 16, 19, 22 and 24 for ease of understanding.

At the start of the test most of the sensors provide a clarity measurement of between 0.2 and 0.3, corresponding to a relatively flat optical profile, which demonstrates that the sample is quite well mixed at this point. It can be observed that the clarity decreases in the regions of sensors 1 to 5 and increases in the regions of 12 to 24 and plateaus within a few minutes. The optical profile continues to change over time and clarity in the regions of sensors 6 to 11 take longer to plateau but it is clear that even by 10 minutes into the test period the sample has settled into distinct regions; the regions of relatively high clarity corresponding to the supernatant liquor separating out towards the top of the sample volume and the regions of relatively low clarity corresponding to the solids settling towards the bottom of the sample volume. Notably, the clarity measurement at sensor 6 does not reach plateau until near the end of the test with a few minutes remaining, after which the optical profile (which comprises two clear and distinct regions) is relatively continuous. This would tend to support that 30 minutes is sufficient to make a meaningful determination of the settlement level (at least in this case).

Monitoring the settlement level or the optical profile of the sample as a function of time has other implications and benefits; tests performed on other samples may reveal that settlement (when the optical profile becomes consistent) occurs much sooner in which case it would be reasonable to terminate the test earlier. Conversely, settlement may still be underway in which case it would be reasonable to allow the test to continue until all sensor measurements have plateaued. Such a determination could be made manually or automated.

At the end of the test period, sensors 1 to 5 give a clarity measurement of between 0 and about 0.12, and sensors 6 to 24 give a clarity measurement of between about 0.8 and 0.96. The interface between the supernatant liquor and the settled solids is clearly in the region between sensor 5 and sensor 6, as evidenced at least by the significant difference in clarity between respective sensors (or discontinuity in the optical profile). As the location of these sensors is known it is therefore possible to determine the percentage of solids in the sample volume. As the sensors are separated by 5 mm, the height of the sample volume is 130 mm, and the lowest numbered sensor which exhibits significant attenuation of light is sensor 5, the percentage of the sample volume occupied by the solids is approximately:

$$\frac{5\ (sensors)x\ 5\ mm}{130\ mm} x100 = 19.2\%$$

As intimated above, the resolution of the measurements can be increased in several ways and the precision of the level determination and measurements derived therefrom improved as a result. For example, monitoring light received from emitter 5 at sensor 6 and vice versa would enable a more accurate determination of the location of the interface (as described above).

An advantage of taking measurements throughout the settlement process, rather than simply observing a well mixed sample at the start and determining the settlement level at the end of the 30 minute test period, is that the behaviour of the sample can be analysed. For example, if the sample settles quickly it can indicate that the sludge is old, whereas if the sample settles slowly it can indicate that the sludge is young.

The duration of the test, 30 minutes, is significant because as noted in the background above one of the most common tests carried out in activated sludge wastewater treatment is the sludge settlement test in which a sample of mixed liquor is collected in a sample container (for example a sample tube or cylinder) and allowed to settle for 30 minutes, after which a measurement is taken of the amount of settled solids at the bottom of the sample tube or cylinder- visually, usually using gradations provided on the sample tube or cylinder itself. If the mixed liquor suspended solids (MLSS) concentration is known this measurement, sometimes referred to as the SV30 number, can be used to calculate the sludge volume index (SVI) which is used to describe the settling characteristic of the sample.

It will therefore be understood that the settlement analysers described herein are capable of making improved measurements of MLSS concentration (based on a ratio of scattered light to transmitted light in a well mixed sample), SV30 numbers (based on a level determination following a 30 minute settlement period) and hence SVI values (determined from the MLSS and SV30 values) without the need for manual intervention, and by monitoring the sample (for example clarity at each measurement location) as a function of time the behaviour of the sample can be analysed to determine other characteristics such as whether the sample is old or young.

Turbidity is another useful measure of the quality of a sample of water (or other fluid). Turbidity is proportional to the concentration of particles suspended in the water, and is generally determined by transmitting light through a sample and measuring the intensity of light scattered at 90 degrees to the direction of light transmission (although it is possible to measure turbidity at 180 degrees). The unit of turbidity is the nephelometric turbidity unit (NLU).

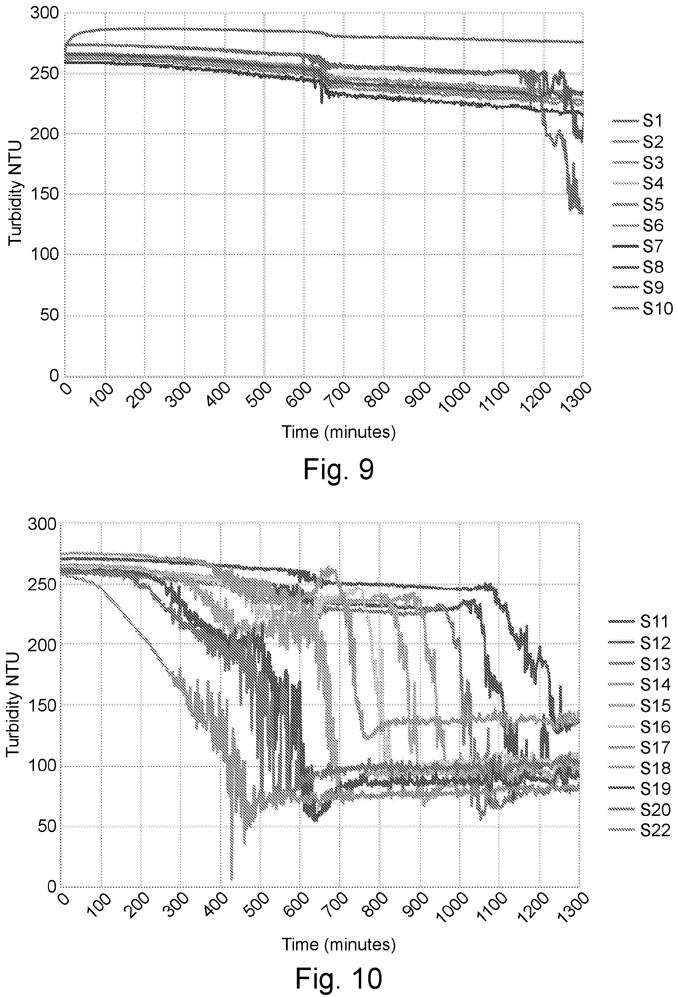

Figures 8, 9 and 10 are graphs showing measurements of turbidity of algae-containing water made using a similar analyser to that used in the sludge settlement analysis example above. Figure 9 is restricted to data from sensors 1 to 10 and Figure 10 is restricted to data from sensors 11 to 22. In this case the sample is a water sample containing an amount of algae, and data is taken from 22 sensors over a period of 1300 minutes. Again, the sample appears to be well mixed at the start of the test, where there is a relatively flat optical profile, but even though settlement begins relatively early, after 1300 minutes there is still some significant settlement occurring and the optical profile is still changing. What can be determined from the traces, which are noisy due to there being a significant amount of movement of solids within the sample volume, is that there is a low fraction of solids (algae) in the measured sample; only sensor 1 (located at the lower end of the sample volume) having exhibited an increase (and subsequent plateau) in turbidity during the test period. From this we can estimate that the percentage of the sample volume occupied by solids (algae) in this sample is (at least) approximately:

$$\frac{1\,(sensors)\,x\;5\;mm}{130\;mm}\,x100 = 3.8\%$$

It will of course be understood that while the examples above relate to samples which separates into two distinct layers or phases, the same measurement and analysis may be performed on a sample which separates into several different layers or phases, for example a sample taken from a multiphase flow such as a flow of hydrocarbon fluids which contains (at least) natural gas, oil and water, or indeed a sample which separates into different layers or phases where the interface between the layers or phases is not distinct (i.e. where there is an interface layer).

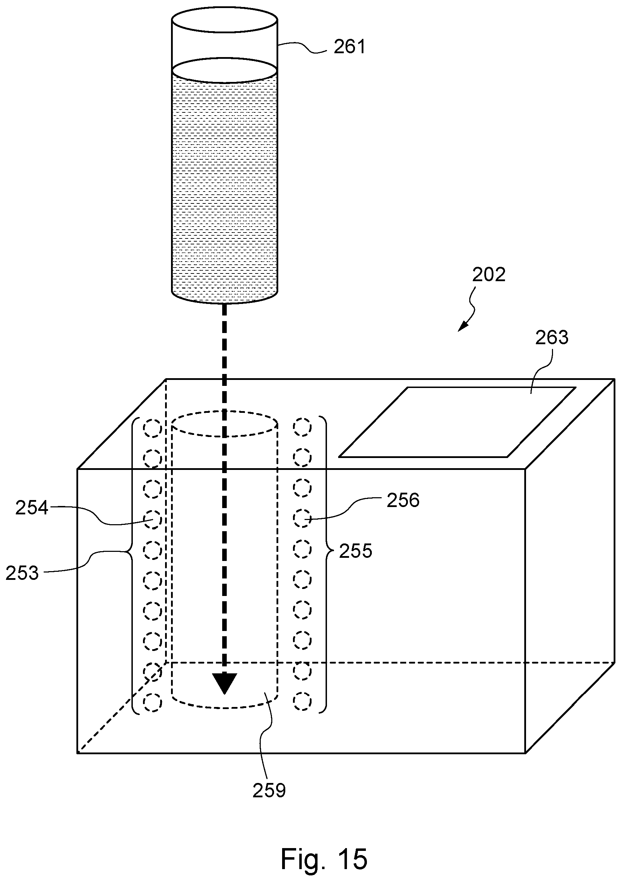

Figures 11 to 14 show the settlement analyser as it (or a number of) may be incorporated into the Applicant's proprietary sampling apparatus, for example as described in UK Patent Number GB2549197, although it will be understood that the settlement analyser is not limited to use in such apparatus. For example, in an alternative embodiment of the invention, discussed further below with reference to Figure 15, the settlement analyser is comprised in apparatus (which might be stand-alone apparatus) that analyses liquid contained within sample containers.

With reference to Figure 11, a sampling apparatus 1 is shown which comprises a sample chamber 3 into which a sample is drawn for subsequent analysis. The sample chamber 3 can be seen to comprise a generally cylindrical shape, with a frusto-conical base. Any shape of the sample chamber 3 can be chosen; this particular shape may promote settlement of suspended solids and may therefore be particularly suited for measurements in the settled mode for determining (for example) the level at which the components of a mixed liquor may settle, the solid volume fraction of particles in the layered fractions, and/or the depth of the interface layer/s between the fractions, using a settlement analyser of the present invention.

Within the sample chamber is a dam 5, which is held in position against an inner surface of the sample chamber 3. The dam prevents fluid communication between inlets 9 and outlets 11, as will be clear from the description of the operation of the sampling apparatus 1 below. The inlets 9 and outlets 11 enable a sample to be drawn into and ejected from the sample chamber 3, respectively. As will be clear, the inlets 9 may serve as outlets and the outlets 11 may serve as inlets depending on the direction in which gate 7 is moved (see below). Although the inlets 9 and outlets 11 are shown as being present only on the cylindrical section 3A of the sample chamber, they may extend down the frusto-conical section 3B and up the bevelled section 3C such that a sample is drawn into the sample chamber 3 through inlets 9 (or outlets 11) which extend the full height of the sample chamber 3.

To draw samples into the sample chamber 3, the apparatus comprises a gate 7 which pivots about a longitudinal axis extending through the sample chamber 3. The gate 7 is reciprocated within the sample chamber 3 by motor 13 via a gear assembly 15. The motor 13, and hence movement of the gate 7, is controlled by gate control electronics 17 which may in turn be controlled by commands or signals received from apparatus control electronics or an external controller (not shown).

Embedded in a sample-facing first surface 5A of the dam 5 is a settlement analyser 51 which in this embodiment extends from the bottom of the dam 5 (and hence the bottom of the sample chamber 3) to the top of the dam 5 (and hence the top of the sample chamber 3). The settlement analyser 51 takes the form of a channel with an array of emitters provided on one inner surface of the channel and an array of detectors provided on an opposing inner surface of the channel, such as illustrated in Figure 1. An additional array of detectors can be provided on a third surface joining the opposing surfaces and parallel to the first surface 5A of the dam 5, such as illustrated in Figure 2.

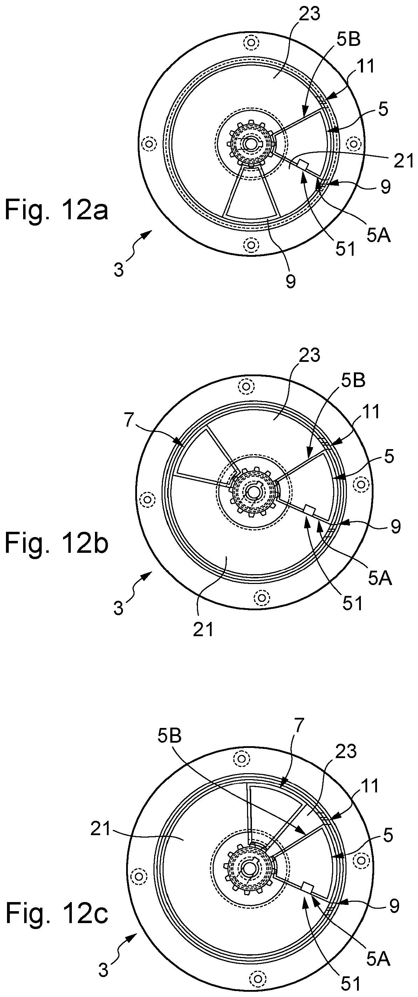

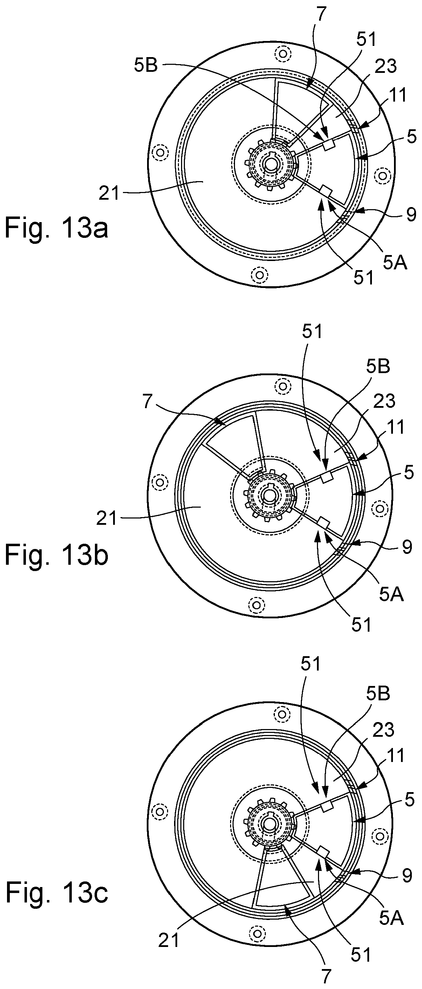

Figures 12 and 13 illustrate how the gate 7 draws a sample into the chamber 3 while simultaneously ejecting a previous sample from the chamber 3. Figures 12(a)-(c) show the movement of the gate 7 in a clockwise direction within the chamber 3. Notably, the inlets 9 and outlets 11 are located proximal to the dam 5, and the dam 5 prevents fluid communication between the inlets 9 and outlets 11. Starting from a position where the gate 7 abuts a first face 5A of the dam 5 (which also blocks the inlets 9) the gate 7 can be seen to rotate about the above-mentioned longitudinal axis. This draws a sample into the space 21 behind the gate 7 via the inlets 9 as the gate 7 progresses, while ejecting the contents of the space 23 in front of the gate 7 via the outlets 11. The gate 7 continues to rotate within the chamber 3 until it abuts a second face 5B of the dam 5, at which point the previous sample has been ejected from the chamber 3. The outlets 11 are now blocked by the gate 7.

In this position, the settlement analyser 51 is exposed to and is therefore able to analyse the contents of the sample chamber 3 (or at least that portion of the contents of the sample chamber with the channel or sample volume of the settlement analyser) according to the above description. A measurement performed immediately or shortly after the sample has been drawn into the sample chamber 3 permits, for example, a determination of the quantity of particles in the completely mixed sample, a determination of MLSS concentration, and/or a turbidity measurement. After a delay, during which the sample settles or separates into component layers, a measurement performed at this time permits determination (for example) of the level/s at which each component settles, the solid volume fraction of particles in the layered fractions, and/or the depth of the interface layer between the fractions. As noted above however there are advantages to performing measurements during the entire settlement period.

Figures 13(a)-(c) shows a slightly modified embodiment of the apparatus shown in Figure 12, in which the dam 5 is provided with a settlement analyser 51 on both faces 5A and 5B. Starting from a position where the gate 7 abuts the second face 5B of the dam 5 (which also blocks the outlets 11) the gate 7 can be seen to again rotate about the above-mentioned longitudinal axis, this time in the opposite direction to that described above. This draws a sample into the space 23 behind the gate 7 via the outlets 11 (which now function as inlets) as the gate 7 progresses, while ejecting the sample obtained as above from the space 21 in front of the gate 7 via the inlets 9 (which now function as outlets). The gate 7 continues to rotate within the chamber 3 until it abuts the first face 5A of the dam 5, at which point the sample obtained as above has been ejected from the chamber 3. In this position the inlets 9 will now (again) be blocked. As there is a settlement analyser 51 on the second face 5B of the dam 5, this now becomes the sample facing surface and it is now possible to analyse the new contents of the sample chamber 3 in a similar way.

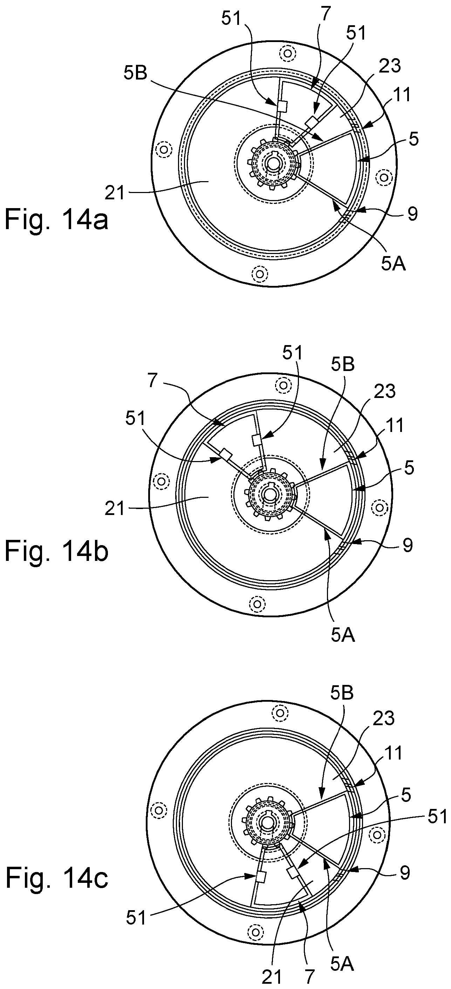

It will be understood that as shown in Figure 12 a settlement analyser 51 may be provided on one side of the dam 5, or as shown in Figure 13 a settlement analyser 51 may be provided on both sides of the dam 5. Alternatively, it is also foreseen that a settlement analyser 51 may be provided on one or both sides of the gate 7, as indicated by feature 51' in Figure 11 and as illustrated in Figure 14 (which corresponds to Figure 13). In any of these arrangements the dam 5 and/or the gate 7 can be hollow and the internal volume of dam 5 and/or the gate 7 provides access and/or space for sensor electronics or at least conduits to interface the sensors with electronics and/or controllers housed elsewhere in the sampling apparatus 1 (for example in the top housing 33).

The dam 5 and/or the gate 7 can be provided with other sensors in addition to the (one or more) settlement analyser(s) 51. Examples of sensors which might be employed include oxygen sensors (for example to measure dissolved oxygen in the sample), temperature sensors, chemical sensors (for example to measure the presence of potassium or ammonium), pH sensors, density sensors, conductivity sensors and salinity sensors. A contact sensor might also be employed to detect when the gate abuts the dam, at which point the motor driving the dam can be automatically stopped.

Reciprocation of the gate 7 back and forward between first and second positions where it abuts first and second faces 5A,5B of the dam 5, provides a mechanism for repeatably and repeatedly drawing samples into the sample chamber 3 and ejecting samples from the sample chamber 3 in an effective and an efficient manner. Whether the settlement analyser 51 is located on the dam 5 or the gate 7, it is envisaged that the action of reciprocating the gate 7 will aid in flushing out the sampling channel of the settlement analyser 51. However, micropumps may be provided to flush out the settlement analyser 51 between samples/measurements. Such pumps, or indeed other pumps, may also be used to agitate a captured sample. Such agitation may be used to assist in ejection of the sample. Alternatively, or additionally, the sampling apparatus 1 may be provided with one or more pumps to allow for inoculation of a captured sample with gaseous and/or liquid inoculants.

Alternatively, or in addition, the gate 7 or the dam 5, respectively, can be provided with a web or similar protrusion (not shown) which cooperates with the settlement analyser 51 such that when the dam 5 is in contact with or close to the gate 7, the web is received in the sampling channel of the settlement analyser 51 to aid in removing the sample from the sampling channel. The web may therefore comprise wipers, brushes or the like, that may serve to wipe and/or clean the emitters and detectors of the respective arrays.

The top housing 33 is attached to a post 35 (the full extent of which is not shown) which enables the sampling apparatus 1 to be mounted within, for example, a process or flow. Selection of an appropriate length of post 35 enables the apparatus 1 to be submerged to a predetermined or desired depth within a process or flow, and if provided with a hermetic seal (as is preferred) the apparatus 1 can be left in situ indefinitely. One of the advantages of immersing the apparatus is the removal of the need for trace heating or cooling for electronics (and other components) due to the extremes of summer or winter conditions since it is anticipated that a process or flow may provide acceptable environmental conditions within the operating restrictions of the apparatus.

The post 35 is hollow to enable communication of data to and/or control of the apparatus by an external controller via one or more conduits (not shown). Alternatively the apparatus may communicate with an external controller using wireless communication protocols such as Bluetooth, Wi-Fi, NFC or the like. The hollow post may enable delivery of inoculants to outlets on the dam/gate and/or supply of air or water to micropumps on the dam/gate from an external source.

In combination with a suitable controller, the apparatus 1 may form part of a process or flow (including multiphase flow) monitoring system. Furthermore, the apparatus may be employed to monitor a process or flow by obtaining samples from the process or flow and performing or enabling measurements on those samples. The process or flow may be altered responsive to the measurements made by the apparatus, thus enabling improved performance.

In an alternative embodiment of the invention the settlement analyser may be comprised in an apparatus which, instead of actively drawing samples into and ejecting samples from a sample chamber in which the settlement analyser is situated, receives samples contained within sample containers such as test tubes.

Such an apparatus is illustrated in schematic form in Figure 15, which shows a standalone settlement analysing apparatus 201 which receives a sample container or tube 261 containing a liquid sample. The sample container 261 is received in a receptacle 259 which corresponds to the sampling channel 59 shown in and discussed in relation to Figure 1 (for example). At opposing sides of the receptacle 259 are located an array 253 of emitters 254 and an array 255 of detectors 256.

The use of a sample container 261 which, for example, might be glass or Perspex, introduces a slight complication in that transmission through the sample is now attenuated by the material of the sample container 261. Accordingly, while the sample analysis carried out on the sample can follow the steps outlined above in relation to the settlement analyser 51 shown in and discussed in relation to Figure 1 for example, an additional calibration step may be necessary (or at least recommended) in which an empty sample container or a sample container filled with distilled water or other calibration liquid is inserted into the apparatus and calibration measurements made before inserting the sample container 261 containing the sample to be analysed. The calibration data can be used to calibrate any measurements then carried out on the real sample.

The results of the sample analysis, which may include graphical data corresponding to or similar to Figures 5 to 10 as well as simple numerical data, can be displayed on an optional built-in display 263 or transmitted to a separate controller such as a PC for external processing and/or display.

The invention provides a settlement analyser and a method of analysing settlement which employs an array of emitters and at least one array of detectors, wherein the settlement analyser is configured to analyse a sample placed or otherwise located between the array of emitters and the at least one array of detectors by sequentially emitting light from the array of emitters, and detecting light which arrives at the at least one array of detectors via the sample volume. Repeating this sequence allows an optical profile of the sample to be determined as a function of time. The sequence may be a linear sequence, or it may be a non-linear sequence, and light from a particular emitter may be detected by several different detectors in order to increase the resolution of the analyser and the method. The analyser and the method may thereby identify the location of boundaries or interfaces between different layers in a sample once settled and during settlement. Furthermore, measurements obtained by the settlement analyser and method may be used to determine one or more properties of the sample, including MLSS concentration, SV30 number and SVI value. In one embodiment one or more settlement analysers may be comprised in an apparatus which may be located in a process or flow and thereby obtain and analyse samples directly from the process or flow, and in another embodiment a stand-alone analyser is able to receive and analyse samples within sample holders.

As may be used herein, the terms bottom, lower, below and the like are descriptive of a feature that is located towards a first end/side of an apparatus, system or component while the terms top, upper, above and the like are descriptive of a feature that is located towards a second, opposing end/side of the apparatus, system or component. Such an apparatus, system or component may be inverted without altering the scope of protection which, as below, is defined by the appended claims.

Throughout the specification, unless the context demands otherwise, the terms "comprise" or "include", or variations such as "comprises" or "comprising", "includes" or "including" will be understood to imply the inclusion of a stated integer or group of integers, but not the exclusion of any other integer or group of integers.

The foregoing description of the invention has been presented for the purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated.

**Claims**

1. A settlement analyser (151) comprising an array (153) of emitters (154) and at least two arrays (155,157) of detectors (156,158), a sample volume between the array of emitters and the at least two arrays of detectors, wherein the array of emitters and the at least two arrays of detectors are each oriented vertically, wherein the settlement analyser is configured to analyse a sample within the sample volume (159) by sequentially emitting light from emitters (154) of the array of emitters, and detecting light which arrives at the at least two arrays (155,157) of detectors (156,158) via the sample volume,

   wherein the at least two arrays of detectors comprises a first array (155) of detectors (156) which is diametrically opposite the array (153) of emitters (154) with respect to the sample volume (159) and a second array (157) of detectors (158) which is oriented at 90 degrees to the array of emitters with respect to the sample volume to detect light from the array of emitters that is scattered within the sample,
   wherein the settlement analyser is configured to determine at least one optical profile of the sample within the sample volume by detecting light emitted by each emitter of the array of emitters at a corresponding detector of the at least two arrays of detectors, and
   wherein the settlement analyser is configured to determine the at least one optical profile as a function of time by repeating the sequence.

2. The settlement analyser of any preceding claim, wherein the at least one optical profile corresponds to a transmittance profile, a clarity profile, a turbidity profile, a fluorescence profile, or the like.

3. The settlement analyser of any preceding claim, configured to determine the location of one or more interfaces within the sample based on the at least one optical profile of the sample.

4. The settlement analyser of any preceding claim, wherein the number of detectors in each of the at least two arrays of detectors is equal to the number of emitters in the array of emitters.

5. The settlement analyser of any preceding claim, wherein the array of emitters and/or the arrays of detectors is a linear array, or is interleaved or staggered.

6. The settlement analyser of any preceding claim, wherein the settlement analyser comprises an integrated controller or processor, or wherein the settlement analyser comprises a separate controller or is connectable to a separate controller.

7. The settlement analyser of any preceding claim, wherein light is emitted from the array of emitters in a linear sequence.

8. The settlement analyser of any preceding claim, wherein the sample volume is configured, arranged, adapted or otherwise able to receive the sample within a sample holder.

9. The settlement analyser of any preceding claim, wherein the settlement analyser further comprises a visual display to display one or more results of the analysis, wherein the visual display may comprise an LCD screen, AMOLED screen, or the like.

10. A method of analysing settlement within a sample comprising;

    providing an array (153) of emitters (154) and at least two arrays (155,157) of detectors (156,158) wherein the array (153) of emitters (154) and the at least two arrays (155,157) of detectors (156,158) are each oriented vertically; locating the sample between the array of emitters and the at least two arrays of detectors; sequentially emitting light from emitters (154) of the array (153) of emitters; and detecting light which arrives at the at least two arrays (155,157) of detectors (156,158) via the sample; wherein a first array (155) of detectors (156) is located diametrically opposite the array (153) of emitters, and a second array (157) of detectors (158) is located at 90 degrees to the array (153) of emitters to detect light from the array of emitters that is scattered within the sample; wherein the method comprises determining at least one optical profile of the sample by detecting light emitted by each emitter of the array of emitters and passing through the sample at a corresponding detector of the at least two arrays of detectors, and determining the at least one optical profile as a function of time by repeating the sequence.

11. The method of claim 10 wherein the at least one optical profile corresponds to a transmittance profile, a clarity profile, a turbidity profile, or a fluorescence profile.

12. The method of claim 10 or claim 11, comprising determining the location of one or more interfaces within the sample based on the at least one optical profile of the sample by identifying discontinuities in the at least one optical profile.

13. The method of any of claims 10 to 12, wherein the method comprises determining MLSS concentration within the sample based on a ratio between an optical profile which relates to light scattered within the sample volume and an optical profile which relates to light transmitted through the sample volume, when the sample is well-mixed.

14. The method of any of claims 10 to 13, wherein the method comprises determining an SV30 number for the sample based on the location of an interface within the sample, and optionally determining an SVI value based on the MLSS concentration and the SV30 number.

15. An apparatus for obtaining samples from a process or flow, the apparatus comprising a sample chamber comprising at least one inlet and at least one outlet, a dam positioned in the chamber between the at least one inlet and the at least one outlet, and a gate moveable within the chamber between a first position and a second position to eject a first sample from the chamber via the at least one outlet and simultaneously draw a second sample into the chamber via the at least one inlet;
wherein the apparatus further comprises at least one settlement analyser according to any of claims 1 to 9, optionally located on one or both sample-facing surfaces of the dam or the gate.

**Patentansprüche**

1. Ein Setzungsanalysator (151) der eine Anordnung (153) von Emittern (154) und mindestens zwei Anordnungen (155, 157) von Detektoren (156, 158) umfasst, ein Probenvolumen zwischen der Anordnung von Emittern und den mindestens zwei Anordnungen von Detektoren, wobei die Anordnung von Emittern und die mindestens zwei Anordnungen von Detektoren jeweils vertikal ausgerichtet sind,

wobei der Setzungsanalysator so konfiguriert ist, dass er eine Probe im Probenvolumen (159) durch sequentielles Emittieren von Licht von den Emittern (154) der Anordnung analysiert und Licht erkennt, das über das Probenvolumen zu den mindestens zwei Anordnungen (155, 157) von Detektoren (156, 158) gelangt, wobei die mindestens zwei Detektoren eine erste Anordnung (155) von Detektoren (156) umfassen, die der Anordnung (153) von Emittern (154) in Bezug auf das Probenvolumen (159) diametral gegenüberliegt, und eine zweite Anordnung (157) von Detektoren (158), die in einem Winkel von 90 Grad zur Anordnung von Emittern in Bezug auf das Probenvolumen ausgerichtet sind, um das in der Probe gestreute Licht der Anordnung von Emittern zu erfassen,

wobei der Setzungsanalysator so konfiguriert ist, dass er mindestens ein optisches Profil der Probe innerhalb des Probenvolumens bestimmt, indem er das von jedem Emitter der Anordnung von Emittern emittierte Licht an einem entsprechenden Detektor der mindestens zwei Anordnungen von Detektoren erfasst, und wobei der Setzungsanalysator so konfiguriert ist, dass er das mindestens eine optische Profil durch Wiederholung der Sequenz als Funktion der Zeit bestimmt.

2. Der Setzungsanalysator nach einem der vorhergehenden Ansprüche, wobei das mindestens eine optische Profil einem Transmissionsprofil, einem Klarheitsprofil, einem Trübungsprofil, einem Fluoreszenzprofil oder dergleichen entspricht.

3. Der Setzungsanalysator nach einem der vorhergehenden Ansprüche, der so konfiguriert ist, dass er die Position einer oder mehrerer Grenzflächen innerhalb der Probe anhand des mindestens einen optischen Profils der Probe bestimmt.

4. Der Setzungsanalysator nach einem der vorhergehenden Ansprüche, wobei die Anzahl der Detektoren in jeder der mindestens zwei Anordnungen von Detektoren der Anzahl der Emitter in der jeweiligen Anordnung von Emittern entspricht.

5. Der Setzungsanalysator nach einem der vorhergehenden Ansprüche, wobei die Anordnung von Emittern und/oder die Anordnungen von Detektoren linear, verschachtelt oder versetzt angeordnet sind.

6. Der Setzungsanalysator nach einem der vorhergehenden Ansprüche, wobei der Setzungsanalysator einen integrierten Controller oder Prozessor umfasst oder wobei der Setzungsanalysator einen separaten Controller umfasst oder an einen separaten Controller anschließbar ist.

7. Der Setzungsanalysator nach einem der vorhergehenden Ansprüche, wobei Licht von der Anordnung von Emittern in linearer Folge emittiert wird.

8. Der Setzungsanalysator nach einem der vorhergehenden Ansprüche, wobei das Probenvolumen konfiguriert, angeordnet, angepasst oder anderweitig in der Lage ist, die Probe in einem Probenhalter aufzunehmen.

9. Der Setzungsanalysator nach einem der vorhergehenden Ansprüche, wobei der Setzungsanalysator zudem eine visuelle Anzeige zur Anzeige eines oder mehrerer Analyseergebnisse umfasst, wobei die visuelle Anzeige einen LCD-Bildschirm, einen AMOLED-Bildschirm oder dergleichen umfassen kann.

EP 4 025 897 B1

**10.** Ein Verfahren zur Analyse der Setzung in einer Probe, das Folgendes umfasst:

Bereitstellen einer Anordnung (153) von Emittern (154) und mindestens zweier Anordnungen (155, 157) von Detektoren (156, 158), wobei die Anordnung (153) von Emittern (154) und die mindestens zwei Anordnungen (155, 157) von Detektoren (156, 158) jeweils vertikal ausgerichtet sind;
Auffinden der Probe zwischen der Anordnung von Emittern und den mindestens zwei Anordnungen von Detektoren;
sequentielles Emittieren von Licht von Emittern (154) der Anordnung (153) von Emittern und Erkennen von Licht, das über die Probe zu den mindestens zwei Anordnungen (155, 157) von Detektoren (156, 158) gelangt;
wobei eine erste Anordnung (155) von Detektoren (156) diametral gegenüber der Anordnung (153) von Emittern und eine zweite Anordnung (157) (von Detektoren 158) im 90-Grad-Winkel zur Anordnung (153) von Emittern angeordnet ist, um das in der Probe gestreute Licht der Anordnung von Emittern zu erfassen;
wobei das Verfahren das Bestimmen mindestens eines optischen Profils der Probe durch Erkennen des von jedem Emitter der Anordnung von Emittern emittierten und die Probe durchdringenden Lichts an einem entsprechenden Detektor der mindestens zwei Anordnungen von Detektoren und das Bestimmen des mindestens einen optischen Profils als Funktion der Zeit durch Wiederholung dieser Sequenz umfasst.

**11.** Das Verfahren nach Anspruch 10, wobei das mindestens eine optische Profil einem Transmissionsprofil, einem Klarheitsprofil, einem Trübungsprofil oder einem Fluoreszenzprofil entspricht.

**12.** Das Verfahren nach Anspruch 10 oder 11, das das Bestimmen der Position einer oder mehrerer Grenzflächen innerhalb der Probe anhand des mindestens einen optischen Profils der Probe durch Identifizierung von Diskontinuitäten in dem mindestens einen optischen Profil umfasst.

**13.** Das Verfahren nach einem der Ansprüche 10 bis 12, wobei das Verfahren das Bestimmen der MLSS-Konzentration innerhalb der Probe anhand des Verhältnisses zwischen einem optischen Profil, das sich auf im Probenvolumen gestreutes Licht bezieht, und einem optischen Profil, das sich auf durch das Probenvolumen transmittiertes Licht bezieht, wenn die Probe gut durchmischt ist, umfasst.

**14.** Das Verfahren nach einem der Ansprüche 10 bis 13, wobei das Verfahren das Bestimmen eines SV30-Werts für die Probe anhand der Position einer Grenzfläche innerhalb der Probe und optional das Bestimmen eines SVI-Werts anhand der MLSS-Konzentration und des SV30-Werts umfasst.

**15.** Eine Vorrichtung zur Entnahme von Proben aus einem Prozess oder Durchfluss, wobei die Vorrichtung eine Probenkammer mit mindestens einem Einlass und mindestens einem Auslass, einen in der Kammer zwischen dem mindestens einen Einlass und dem mindestens einen Auslass angeordneten Damm und ein in der Kammer zwischen einer ersten und einer zweiten Position bewegliches Tor umfasst, um eine erste Probe über den mindestens einen Auslass aus der Kammer auszustoßen und gleichzeitig eine zweite Probe über den mindestens einen Einlass in die Kammer zu ziehen;
wobei die Vorrichtung zudem mindestens einen Setzungsanalysator gemäß einem der Ansprüche 1 bis 9 umfasst, der sich optional auf einer oder beiden der Probe zugewandten Oberflächen des Damms oder des Tors befindet.

**Revendications**

**1.** Un analyseur de règlement (151) comprenant un réseau (153) d'émetteurs (154) et au moins deux réseaux (155, 157) de détecteurs (156, 158), un volume d'échantillon entre le réseau d'émetteurs et les réseaux de détecteurs, dans lequel le réseau d'émetteurs et les réseaux de détecteurs sont chacun orientés verticalement, dans lequel l'analyseur de règlement est configuré pour analyser un échantillon dans le volume d'échantillon (159) en émettant de manière séquentielle de la lumière à partir des émetteurs (154) du réseau d'émetteurs et en détectant la lumière qui arrive au niveau des réseaux (155, 157) de détecteurs (156, 158) par l'intermédiaire du volume d'échantillon,

dans lequel les réseaux de détecteurs comprennent un premier réseau (155) de détecteurs (156) qui est diamétralement opposé au réseau (153) d'émetteurs (154) relativement au volume d'échantillon (159) et un deuxième réseau (157) de détecteurs (158) qui est orienté à 90 degrés par rapport au réseau d'émetteurs relativement au volume d'échantillon pour détecter la lumière provenant du réseau d'émetteurs qui est diffusée dans l'échantillon,
dans lequel l'analyseur de règlement est configuré pour déterminer au moins un profil optique de l'échantillon dans le volume d'échantillon en détectant la lumière émise par chaque émetteur du réseau d'émetteurs au niveau d'un détecteur correspondant des réseaux de détecteurs, et

12

dans lequel l'analyseur de règlement est configuré pour déterminer le profil optique en fonction du temps en répétant la séquence.

2. L'analyseur de règlement de l'une des revendications précédentes, dans lequel le profil optique correspond à un profil de transmission, un profil de clarté, un profil de turbidité, un profil de fluorescence ou un profil similaire.

3. L'analyseur de règlement de l'une des revendications précédentes, configuré pour déterminer l'emplacement d'une ou de plusieurs interfaces dans l'échantillon sur la base du profil optique de l'échantillon.

4. L'analyseur de règlement de l'une des revendications précédentes, dans lequel le nombre de détecteurs dans chacun des réseaux de détecteurs est égal au nombre d'émetteurs dans le réseau d'émetteurs.

5. L'analyseur de règlement de l'une des revendications précédentes, dans lequel le réseau d'émetteurs et/ou les réseaux de détecteurs constituent un réseau linéaire, ou sont intercalés ou décalés.

6. L'analyseur de règlement de l'une des revendications précédentes, dans lequel l'analyseur de règlement comprend un contrôleur ou un processeur intégré ou dans lequel l'analyseur de règlement comprend un contrôleur séparé ou peut être connecté à un contrôleur séparé.

7. L'analyseur de règlement de l'une des revendications précédentes, dans lequel la lumière est émise à partir du réseau d'émetteurs dans une séquence linéaire.

8. L'analyseur de règlement de l'une des revendications précédentes, dans lequel le volume d'échantillon est configuré, disposé, adapté pour ou capable de recevoir l'échantillon dans un porte-échantillon.

9. L'analyseur de règlement de l'une des revendications précédentes, dans lequel l'analyseur de règlement comprend en outre un affichage visuel permettant d'afficher un ou plusieurs résultats de l'analyse et dans lequel l'affichage visuel peut comprendre un écran LCD, un écran AMOLED ou un écran similaire.

10. Le procédé d'analyse de règlement d'un échantillon consistant à ;

fournir un réseau (153) d'émetteurs (154) et au moins deux réseaux (155, 157) de détecteurs (156, 158), dans lequel le réseau (153) d'émetteurs (154) et les réseaux (155, 157) de détecteurs (156, 158) sont chacun orientés verticalement ;

placer l'échantillon entre le réseau d'émetteurs et les réseaux de détecteurs ; émettre de manière séquentielle de la lumière à partir des émetteurs (154) du réseau (153) d'émetteurs ; et à

détecter la lumière qui arrive au niveau des réseaux (155, 157) de détecteurs (156, 158) par l'intermédiaire de l'échantillon ;

dans lequel un premier réseau (155) de détecteurs (156) est diamétralement opposé au réseau (153) d'émetteurs et un deuxième réseau (157) de détecteurs (158) est situé à 90 degrés par rapport au réseau (153) d'émetteurs pour détecter la lumière provenant du réseau d'émetteurs qui est diffusée dans l'échantillon ;

dans lequel le procédé consiste à déterminer au moins un profil optique de l'échantillon en détectant la lumière émise par chaque émetteur du réseau d'émetteurs et traversant l'échantillon au niveau d'un détecteur correspondant des réseaux de détecteurs et à déterminer le profil optique en fonction du temps en répétant la séquence.

11. Le procédé de la revendication 10, dans lequel le profil optique correspond à un profil de transmission, un profil de clarté, un profil de turbidité ou un profil de fluorescence.

12. Le procédé de la revendication 10 ou 11, consistant à déterminer l'emplacement d'une ou de plusieurs interfaces dans l'échantillon sur la base du profil optique de l'échantillon en identifiant des discontinuités dans le profil optique.

13. Le procédé de l'une des revendications 10 à 12, dans lequel le procédé consiste à déterminer la concentration de matières solides en suspension dans la liqueur mixte (MLSS) dans l'échantillon sur la base d'un rapport entre un profil optique qui se rapporte à la lumière diffusée dans le volume d'échantillon et un profil optique qui se rapporte à la lumière transmise à travers le volume d'échantillon, lorsque l'échantillon est bien mélangé.

14. Le procédé de l'une des revendications 10 à 13, dans lequel le procédé consiste à déterminer un nombre SV30 pour l'échantillon sur la base de l'emplacement d'une interface dans l'échantillon et éventuellement à déterminer une valeur SVI sur la base de la concentration de MLSS et du nombre SV30.

15. Un appareil permettant d'obtenir des échantillons à partir d'un processus ou d'un flux, l'appareil comprenant une chambre d'échantillonnage comprenant au moins une entrée et au moins une sortie, un barrage positionné dans la chambre entre l'entrée et la sortie, et une vanne située dans la chambre pouvant passer d'une première position à une deuxième position et inversement pour éjecter un premier échantillon de la chambre par l'intermédiaire de la sortie et pour aspirer simultanément un deuxième échantillon dans la chambre par l'intermédiaire de l'entrée ; dans lequel l'appareil comprend en outre au moins un analyseur de règlement de l'une des revendications 1 à 9, éventuellement situé sur une ou les deux surfaces du barrage ou de la vanne faisant face à l'échantillon.

Fig. 1

Fig. 2

**Fig. 3**

**Fig. 4**

Fig. 5

Fig. 6

Fig. 7

Fig. 8

Fig. 9

Fig. 10

1

33

15

17

37

7

51'

5

51

3C

3

3A

9

11

3B

Fig. 11

Fig. 12a

Fig. 12b

Fig. 12c

Fig. 13a

Fig. 13b

Fig. 13c

Fig. 14a

Fig. 14b

Fig. 14c

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2549197 A

- WO 2015124235 A1